# EUROPÄISCHE PATENTANMELDUNG

(11) **EP 3 476 617 A1**
(43) Veröffentlichungstag der Anmeldung: **01.05.2019**
(21) Anmeldenummer: 17198346.3
(22) Anmeldetag: 25.10.2017
(51) Int. Cl.: B42B 2/00, B42D 25/24, B42D 25/305, B42D 25/346, B42D 25/355, B42D 25/382

(54) **DOKUMENT MIT NAHT**

(71) Anmelder: Österreichische Staatsdruckerei GmbH, 1230 Wien (AT)
(72) Erfinder: AIGNER, Stephan, 1100 Wien (AT)
(74) Vertreter: Sonn & Partner Patentanwälte

(57) **Zusammenfassung**

Dokument (29) mit mindestens einer Seite (30) und mit zumindest einem Nähfaden (20), welcher an zumindest zwei Nahtpunkten (34, 35) durch ein Loch in der mindestens einen Seite (30) hindurchgeführt ist, wobei die Anordnung der Nahtpunkte (34, 35) einen Sicherheitscode (42) repräsentiert, sowie Verfahren zur Herstellung und zum Auslesen eines solchen Dokuments (29).

## Beschreibung

Die Erfindung betrifft sowohl ein Dokument mit mindestens einer Seite und mit zumindest einem Nähfaden, welcher an zumindest zwei Nahtpunkten durch ein Loch in der mindestens einen Seite hindurchgeführt ist, als auch ein Verfahren zur Herstellung eines solchen Dokuments, als auch ein Verfahren zum Auslesen eines solchen Dokuments. Insbesondere betrifft die Erfindung ein Dokument mit zwei oder mehr Seiten, welche durch einen Nähfaden verbundenen sind, beispielsweise einen Reisepass. Der Begriff "Seite" bezeichnet hier eine einzelne Seite oder eine Doppelseite des Dokuments. Das Dokument kann dementsprechend ein Blatt oder mehrere Blätter aufweisen, deren Flächen die Seite(n) oder Doppelseite(n) bilden, und die z.B. jeweils durch ein flaches Stück Papier oder Kunststoff gebildet sind.

Derartige Dokumente sind bekannt. Insbesondere ist es im Zusammenhang mit mehrseitigen Urkunden üblich, die einzelnen Seiten mittels Nähfaden zu verbinden. Dabei können die Enden des Nähfadens versiegelt sein, um eine unbemerkte Veränderung der Urkunde durch Ersetzen einer Seite zu verhindern. Eine solche Naht kann somit in dieser Hinsicht die Unversehrtheit der Urkunde, allerdings nicht deren Identität oder Echtheit bekunden.

Im Zusammenhang mit einer Markierung von Kleidungsstücken beschreibt die EP 1 316 632 A1 einen Faden, dessen Oberfläche eine Codierung trägt, welche durch eine Ummantelung oder Verformung des Fadens gebildet ist.

Weiters ist es im Zusammenhang mit einer Verpackung von Gegenständen aus WO 2004/044870 A1 bekannt, die Breite einer Naht der Verpackung oder den Winkel der Naht als Kennzeichen zur Identifizierung der Verpackung zu verwenden.

Es ist Aufgabe der Erfindung, eine Markierung zur Bestätigung der Identität oder Echtheit eines Dokuments der eingangs angeführten Art vorzuschlagen.

Erfindungsgemäß ist daher vorgesehen, dass bei einem Dokument mit mindestens einer Seite und mit zumindest einem Nähfaden, welcher an zumindest zwei Nahtpunkten durch ein Loch in der mindestens einen Seite hindurchgeführt ist, die Anordnung der Nahtpunkte einen Sicherheitscode repräsentiert. Die Anordnung der Nahtpunkte ist durch die Anzahl und zweidimensionale Position der Nahtpunkte in der Ebene der mindestens einen Seite vollständig definiert, wobei im Allgemeinen nur ein Teil dieser Information zur Repräsentation des Sicherheitscodes beiträgt.

Das erfindungsgemäße Verfahren zur Herstellung eines solchen Dokuments umfasst dementsprechend die Schritte:
- Ermitteln eines Sicherheitscodes;
- Ermitteln einer Anordnung von Nahtpunkten zur Repräsentation des ermittelten Sicherheitscodes;
- Herstellen von zumindest zwei Löchern in mindestens einer Seite des Dokuments entsprechend der ermittelten Anordnung von Nahtpunkten; und
- Einbringen zumindest eines Nähfadens in die zumindest zwei hergestellten Löcher.

Das erfindungsgemäße Verfahren zum Auslesen eines solchen Dokuments, genauer zum Auslesen eines Sicherheitscodes eines solchen Dokuments umfassend die Schritte:
- Erfassen eines Bilds, vorzugsweise eines Infrarotbilds, der Nahtpunkte der mindestens einen Seite oder Doppelseite des Dokuments;
- Erkennen der Nahtpunkte in dem erfassten Bild;
- Ermitteln der Anordnung der erkannten Nahtpunkte; und
- Ermitteln des Sicherheitscodes des Dokuments aus der ermittelten Anordnung.

Die Repräsentation eines Sicherheitscodes durch die Anordnung der Nahtpunkte hat mehrere Vorteile: Eine Änderung des Sicherheitscodes würde das Auftrennen der Naht und die Herstellung einer neuen Naht mit anders angeordneten Nahtpunkten erfordern und wäre somit leicht erkennbar. Der Sicherheitscode kann daher nur vom Produzenten der Naht festgelegt werden. Bei Dokumenten mit zwei oder mehr Seiten ist der Sicherheitscode auf jeder Seite vorhanden. Aufgrund der strukturellen Repräsentation ist der Sicherheitscode manuell auslesbar und somit manuell überprüfbar.

Vorzugsweise kann der Abstand oder können die Abstände zwischen benachbarten Nahtpunkten einen Sicherheitscode repräsentieren. Der Abstand zwischen benachbarten Nahtpunkten ist nachträglich nicht veränderbar. Zur Änderung des Sicherheitscodes müsste das gesamte Dokument kopiert werden, um dabei die Nahtpunkte mit anderen Abständen herzustellen. Eine solche Kopie des gesamten Dokuments kann effektiv durch spezialisierte Sicherheitselemente (z.B. Wasserzeichen, Sicherheitsdruck oder Hologramme) erschwert oder verhindert werden. Demzufolge ist auch der repräsentierte Sicherheitscode praktisch nicht veränderbar und eignet sich daher besonders zur sicheren Identifizierung des Dokuments. Die Abstände zwischen benachbarten Nahtpunkten sollten einen vordefinierten Mindestabstand, z.B. 1 mm, nicht unterschreiten.

In diesem Zusammenhang ist es besonders günstig, wenn jeder der Abstände, welche den Sicherheitscode repräsentieren, entweder in einen ersten Abstandbereich oder in einen zweiten Abstandbereich fällt, wobei sich der erste Abstandbereich und der zweite Abstandbereich nicht überlappen. Auf diese Weise kann jeder Abstand zur Repräsentation einer Ziffer eines Binärsystems verwendet werden. Oder die Abstände bilden Morsezeichen zur Repräsentation von Buchstaben. Ein so repräsentierter Sicherheitscode ist technisch besonders einfach und zuverlässig auslesbar. Es sind im Rahmen der Erfindung auch Systeme mit einer Basis größer als zwei verwendbar, wobei die Anzahl der Abstandbereiche zumindest gleich groß ist wie die Basis.

Gemäß einer alternativen Ausführungsform der Erfindung kann eine Anordnung der Nahtpunkte quer zu einer allgemeinen Nahtrichtung, insbesondere die Abstände der einzelnen Nahtpunkte von einer Mittellinie sämtlicher Nahtpunkte, den Sicherheitscode repräsentieren. Die allgemeine Nahtrichtung oder die Mittellinie kann beispielsweise durch eine Verbindungslinie zwischen den äußersten Nahtpunkten (einem ersten und letzten Nahtpunkt) definiert sein. Sie kann auch durch einen in regelmäßigen Abständen angeordneten Teil der Nahtpunkte (siehe unten) festgelegt sein. Mit der Position quer zur Nahtrichtung können bis zu vier Zustände (2 Bit) pro Nahtpunkt kodiert werden: Nahtpunkt auf der Mittellinie, links der Mittellinie, rechts der Mittellinie, oder kein Nahtpunkt (Nahtpunkt ausgelassen).

Es hat sich als besonders günstig herausgestellt, wenn ein Teil der Nahtpunkte in regelmäßigen Abständen angeordnet ist und die Anzahl und Anordnung der verbleibenden Nahtpunkte den Sicherheitscode repräsentiert. Dadurch kann eine gewisse Mindeststabilität der Naht durch die in regelmäßigen Abständen angeordneten Nahtpunkte erzielt werden. Die regelmäßige Anordnung kann ein zuverlässig erkennbares Referenzmuster definieren, welches das Auffinden der übrigen Nahtpunkte erleichtert.

Insbesondere können die verbleibenden Nahtpunkte jeweils zwischen zwei der in regelmäßigen Abständen angeordneten Nahtpunkte (auch kurz "regelmäßige Nahtpunkte") angeordnet sein. In diesem Fall kann nur das Vorhandensein eines Nahtpunktes zwischen zwei regelmäßigen Nahtpunkten als Ziffer eines Binärsystems zur Repräsentation des Sicherheitscodes verwendet werden. Es ist dann nicht erforderlich, die exakte Anordnung oder Abstände der Nahtpunkte zu ermitteln, um den Sicherheitscode auszulesen. Diese Art der Repräsentation des Sicherheitscodes ist besonders zuverlässig manuell oder automatisch auslesbar.

Weiteres ist es vorteilhaft, wenn der zumindest eine Nähfaden infrarotes Licht reflektierend ausgebildet ist. Es hat sich herausgestellt, dass die Nahtpunkte eines Dokuments auf einer Infrarotaufnahme besonders deutlich als Bereiche mit einer hohen Absorption für Infrarotstrahlung (z.B. bei etwa 900 bis 1000 nm Wellenlänge) erkennbar sind. Bei der Verwendung einer Infrarotaufnahme ist die Darstellung der Nahtpunkte zudem von der optischen Farbe des Nähfadens unabhängig. Wenn der Nähfaden infrarotes Licht reflektierend ausgebildet ist, hilft das, einen hohen Kontrast bei der Erfassung der Nahtpunkte mit hindurch geführtem Nähfaden zu erhalten. Unter sichtbarem Licht sind die Nahtpunkte nur teilweise erkennbar, abhängig von der Farbe des Nähfadens und des Untergrunddrucks.

Davon abgesehen ist es günstig, wenn die mindestens eine Seite mit einem Referenzmuster bedruckt ist, wobei die Anordnung der Nahtpunkte relativ zu dem Referenzmuster den Sicherheitscode repräsentiert. Wie bereits im Zusammenhang mit regelmäßigen Nahtpunkten allgemein erwähnt, erleichtert ein Referenzmuster das Auffinden der Nahtpunkte. Bei einem gedruckten Referenzmuster kann auf die Verwendung regelmäßiger Nahtpunkte verzichtet werden und im Vergleich dazu eine engere Anordnung der informationstragenden Nahtpunkte erzielt werden. In weiterer Folge kann somit ein längerer Sicherheitscode repräsentiert werden.

Im Zusammenhang mit der Verwendung eines gedruckten Referenzmusters wäre es vorteilhaft, wenn das Referenzmuster mit einer infrarot aktiven Farbe gedruckt ist. Die Vorteile der Verwendung einer Infrarotaufnahme wurden bereits erläutert. Um seine Funktion als Referenzmuster beim Auffinden von Nahtpunkten in einer Infrarotaufnahme zu erfüllen, sollte das Referenzmuster in der Infrarotaufnahme deutlich erkennbar sein. Das kann durch die Verwendung einer infrarot aktiven Farbe erreicht werden.

Vorzugsweise kann der Sicherheitscode zur Authentisierung einer in dem Dokument enthaltenen Information eingerichtet sein. Dadurch kann die Unveränderbarkeit des Sicherheitscodes zur Sicherung der in dem Dokument enthaltenen Information gegenüber Veränderung verwendet werden. Beispielsweise kann der Sicherheitscode einer Prüfsumme der in dem Dokument enthaltenen Information entsprechen, sodass jede Veränderung der Information zu einer Diskrepanz der aus der geänderten Information ermittelten Prüfsumme mit dem Sicherheitscode führt und somit feststellbar ist. Wenn der Sicherheitscode zusätzlich kryptographisch signiert ist, kann dadurch die Identität des Herstellers des Dokuments bestätigt werden. Die in dem Dokument enthaltenen Informationen können beispielsweise Dokumenteigenschaften (z.B. eine Seriennummer, eine Produktionscharge oder ein Produktionsdatum) und/oder von dem Dokument bekundete Informationen (z.B. persönliche Daten eines Reisepassinhabers, wie das Geburtsdatum) sein.

In Bezug auf das erfindungsgemäße Verfahren ist es günstig, wenn die zumindest zwei Löcher als Einstichlöcher beim Einbringen des zumindest einen Nähfadens hergestellt werden. Dadurch kann die Herstellung der Löcher in einem Arbeitsschritt während der Herstellung der Naht erfolgen. Vorzugsweise können etwaige regelmäßige Nahtpunkte im selben Vorgang wie etwaige dazwischen angeordnete Nahtpunkte hergestellt werden.

Bei einer bevorzugten Ausführungsvariante kann die Anordnung der zumindest zwei Löcher bei deren Herstellung durch eine Änderung eines Werkzeugvorschubs und/oder durch Änderung eines Werkstückvorschubs entsprechend der ermittelten Anordnung von Nahtpunkten erzielt werden. In diesem Fall können bestehende Werkzeuge zur Herstellung einer Naht, welche mit einem konstanten Werkzeugvorschub oder einem konstanten Werkstückvorschub arbeiten, mit verhältnismäßig geringen Änderungen zur Durchführung des vorliegenden Verfahrens angepasst werden. Der Werkzeugvorschub und/oder der Werkstückvorschub können beispielsweise durch Maschinenanweisungen für eine Nähmaschine vorgegeben sein.

Im Zusammenhang mit der Verwendung eines gedruckten Referenzmusters wie bereits oben beschrieben, ist es günstig, wenn das Referenzmuster vor dem Herstellen der zumindest zwei Löcher auf mindestens eine Seite des Dokuments gedruckt wird. Beim Herstellen der Löcher kann es zu einer Verformung des Dokuments kommen, welche den Druck stören und zu einem fehlerhaften oder schlecht erkennbaren Referenzmuster führen könnte.

Schließlich ist es in Bezug auf das Verfahren zum Auslesen eines Sicherheitscodes eines Dokuments vorteilhaft, wenn beim Ermitteln einer Anordnung der Nahtpunkte zuerst ein Teil von Nahtpunkten ermittelt wird, welche in regelmäßigen Abständen angeordnet sind, und dann die relative Anordnung der verbleibenden Nahtpunkte zu den Nahtpunkten dieses Teils ermittelt wird, wobei der Sicherheitscode des Dokuments aus der relativen Anordnung der verbleibenden Nahtpunkte ermittelt wird. Die Ermittlung der relativen Anordnung der verbleibenden Nahtpunkte kann sich beispielsweise auf eine Überprüfung des Vorhandenseins eines Nahtpunktes zwischen zwei regelmäßigen Nahtpunkten beschränken. Dabei wird die Anordnung der verbleibenden Nahtpunkte nur dahingehend ermittelt, zwischen welchen regelmäßigen Nahtpunkten sie angeordnet sind. Im Einzelnen können die regelmäßigen Nahtpunkte als Begrenzung für dadurch festgelegte Auslesezonen verwendet werden. Innerhalb der Auslesezonen können - z.B. mit einem vordefinierten Abstand vom Rand der Auslesezone - Suchzonen definiert werden, welche jeweils gezielt auf das Vorhandensein eines Nahtpunkts überprüft werden. Dabei ist es besonders zuverlässig, wenn leere Suchzonen erkannt werden und die übrigen Suchzonen als besetzt, d.h. einen Nahtpunkt aufweisend, angenommen werden. Alternativ können auch Suchzonen mit einem zusätzlichen Nahtpunkt erkannt werden und die übrigen Suchzonen als leer angenommen werden.

Allgemein betrifft die Erfindung auch ein Computerprogrammprodukt, das direkt in den internen Speicher eines digitalen Computers geladen werden kann und Softwarecodeabschnitte umfasst, mit denen die Schritte gemäß einem der oben beschriebenen Verfahren ausgeführt werden, wenn das Computerprogramm auf einem Computer (beispielsweise eines Computer-Standgerätes oder eines mobilen Gerätes, wie einem Smartphone oder einem Tablet-PC) läuft.

Die Erfindung ist nicht auf bestimmte Nahtarten, Nähfäden oder Nähtechniken beschränkt. Außerdem muss nicht zwingend derselbe Nähfaden durch alle Löcher hindurchgeführt sein. Vielmehr können die den Sicherheitscode repräsentierenden Nahtpunkte im Allgemeinen durch Löcher mit verschiedenen hindurch geführten Nähfäden und jeweils zumindest einem hindurch geführten Nähfaden gebildet sein. Vorzugsweise werden zumindest zwei verschiedene Fäden durch sämtliche Löcher hindurchgeführt. Für eine entsprechende Nahtführung geeignete Nähtechniken sind z.B. Kettenstich (engl. "Chain Stitch") oder Doppelsteppstich (engl. "Lockstitch") Verfahren.

Die Erfindung wird nachfolgend anhand von besonders bevorzugten Ausführungsbeispielen, auf die sie jedoch nicht beschränkt sein soll, und unter Bezugnahme auf die Zeichnungen noch weiter erläutert. Dabei zeigen im Einzelnen:

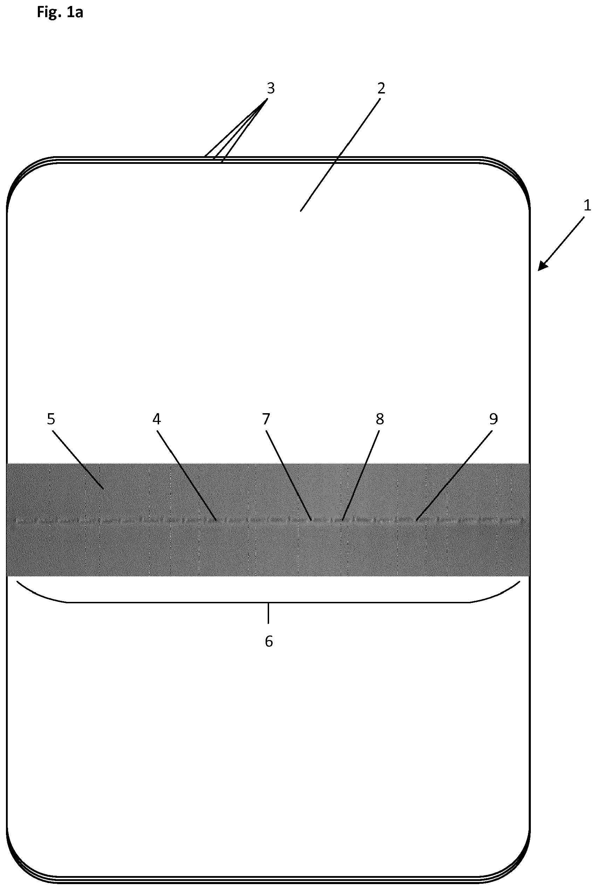

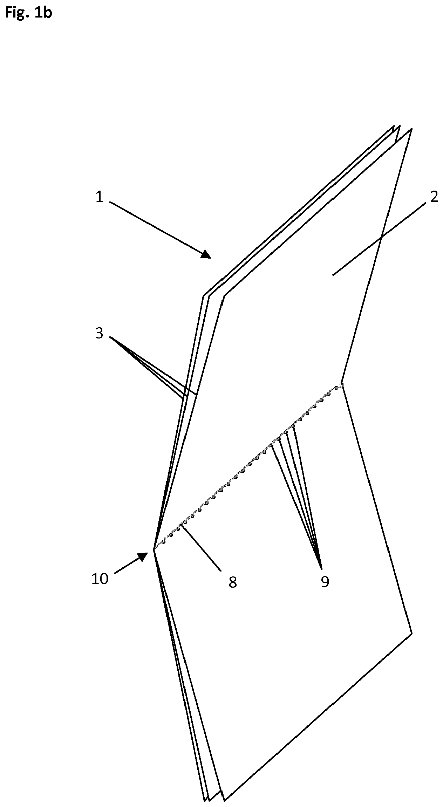

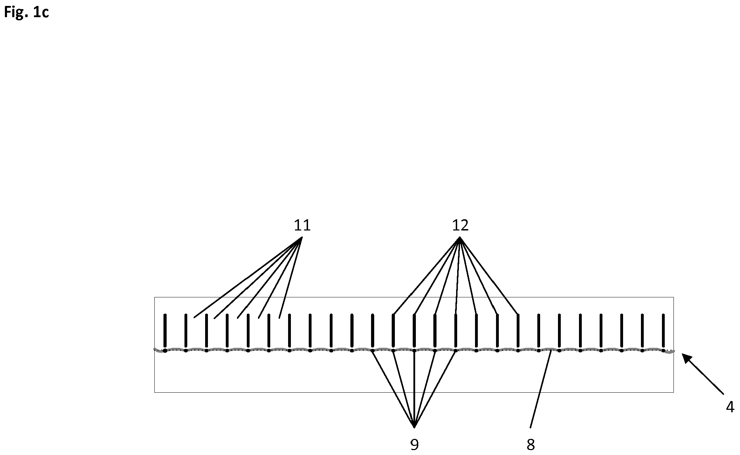

Fig. 1a schematisch ein Dokument in Form eines geöffneten Hefts mit einer Infrarotaufnahme einer Bindungsnaht mit 25 regelmäßig angeordneten Nahtpunkten; Fig. 1b eine schaubildliche Ansicht des Dokuments gemäß Fig. 1a schräg von der Seite mit schematisch dargestellten Nahtpunkten; und Fig. 1c schematisch eine Einteilung der Bindungsnaht in 24 Auslesezonen;

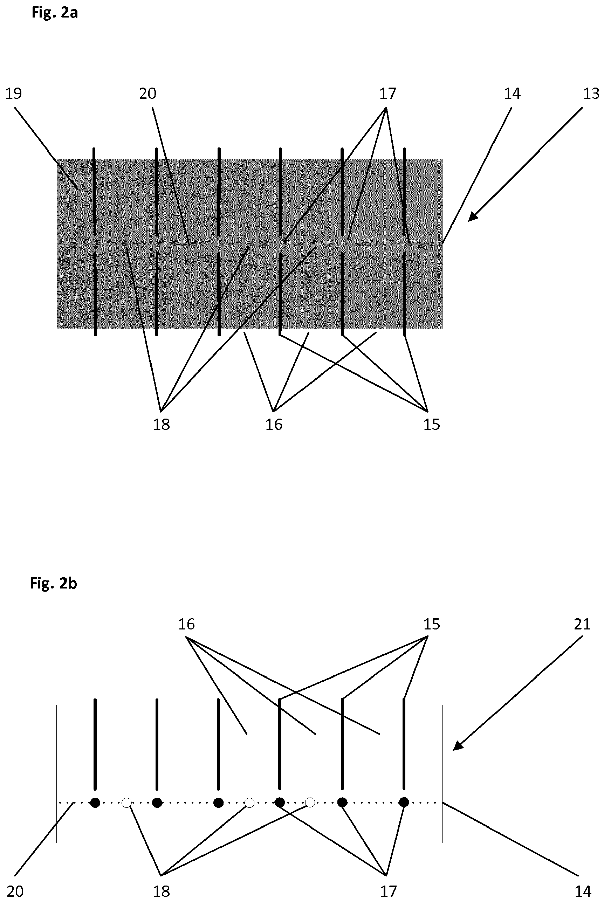

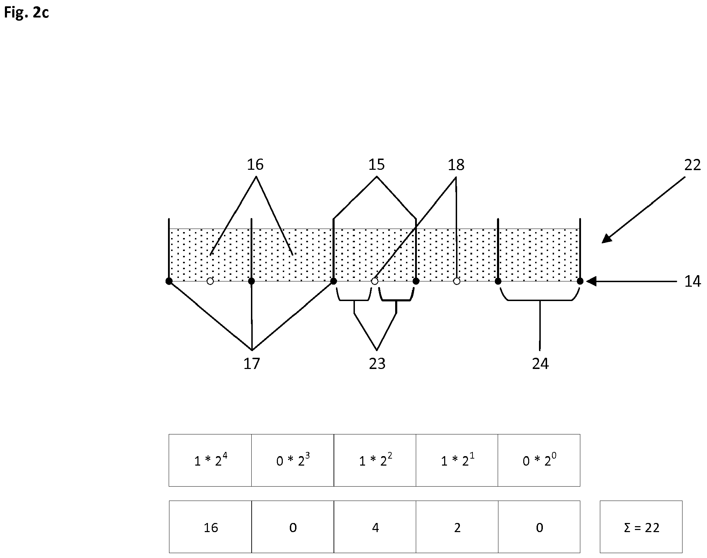

Fig. 2a eine Infrarotaufnahme einer Bindungsnaht eines Dokuments ähnlich der in Fig. 1a gezeigten Infrarotaufnahme, allerdings mit sechs regelmäßig angeordneten Nahtpunkten und drei dazwischen angeordneten Nahtpunkten; Fig. 2b eine schematische Darstellung der Nahtpunkte der in Fig. 2a gezeigten Bindungsnaht; und Fig. 2c eine schematische Darstellung des dadurch repräsentierten binären Sicherheitscodes;

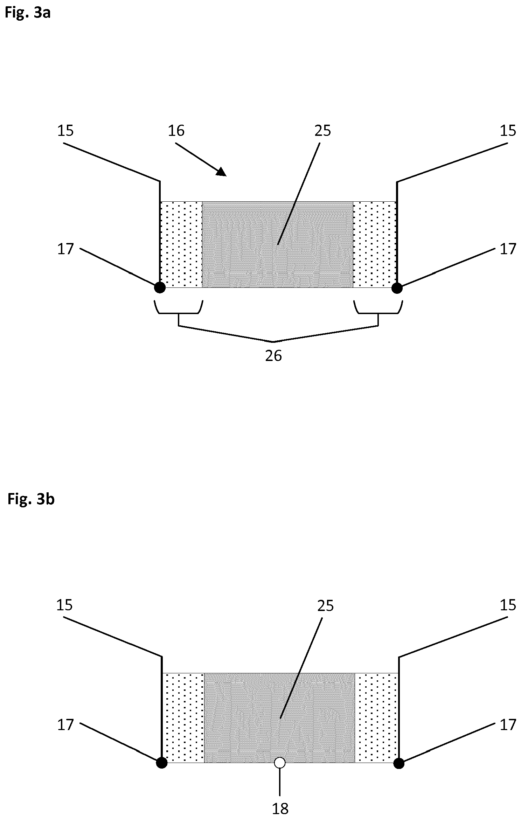

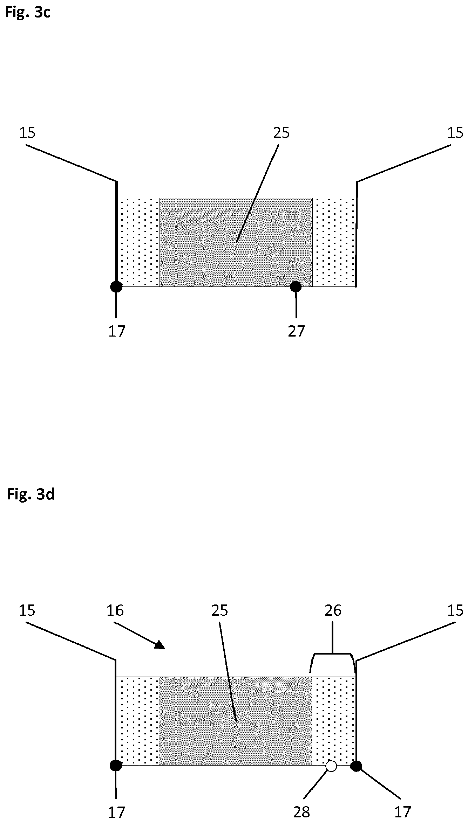

Fig. 3a-d jeweils schematisch einen Bereich zwischen zwei regelmäßig angeordneten Nahtpunkten, ohne dazwischen angeordneten Nahtpunkt (Fig. 3a), mit einem dazwischen angeordneten Nahtpunkt (Fig. 3b), im Fall eines Fehlers der regelmäßigen Anordnung (Fig. 3c) und im Fall eines Fehlers der Anordnung eines dazwischen angeordneten Nahtpunkts (Fig. 3d);

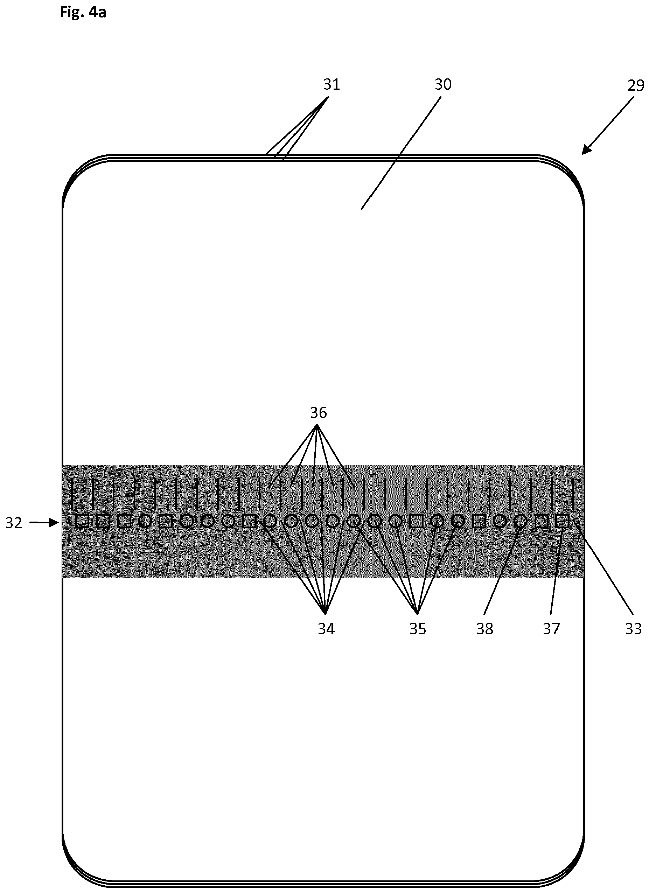

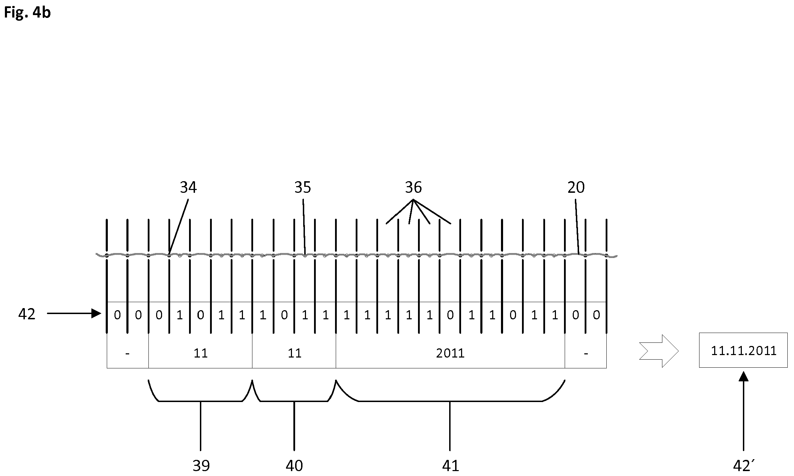

Fig. 4a ein Dokument gemäß Fig. 1a mit zusätzlichen Nahtpunkten zur Repräsentation eines Sicherheitscodes und Fig. 4b ein Schema zur Auswertung des Sicherheitscodes als Datumsangabe;

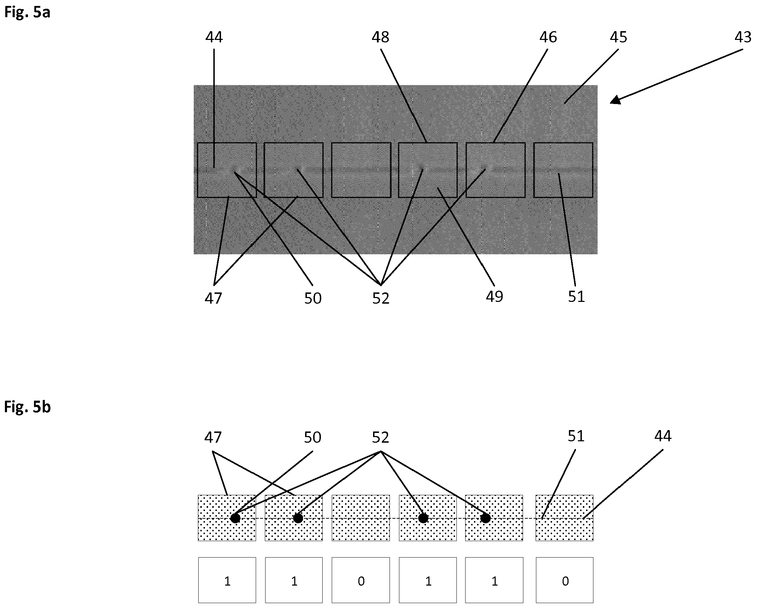

Fig. 5a eine Infrarotaufnahme einer Bindungsnaht eines Dokuments ähnlich der in Fig. 2a gezeigten Infrarotaufnahme, allerdings mit einem gedruckten Referenzmuster und vier Nahtpunkten; und Fig. 5b eine schematische Darstellung des Referenzmusters und der Nahtpunkte gemäß Fig. 5a,

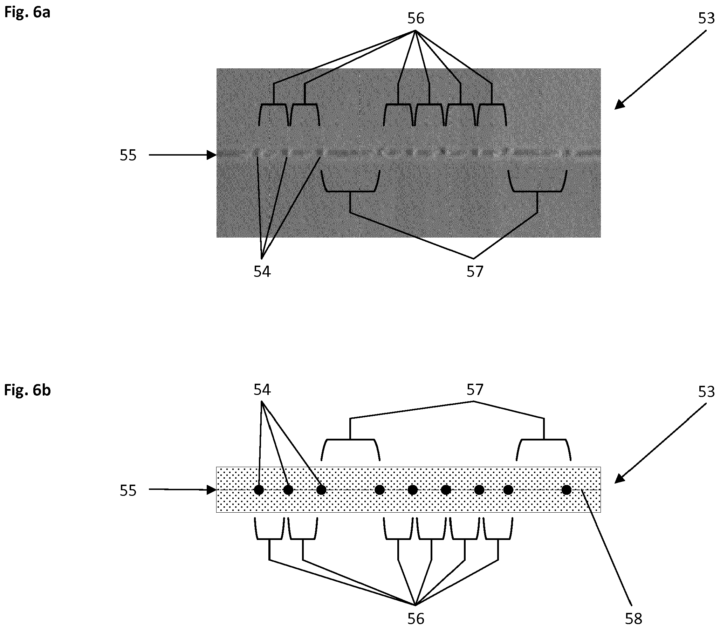

Fig. 6a eine Infrarotaufnahme einer Bindungsnaht eines Dokuments ähnlich der in Fig. 2a gezeigten Infrarotaufnahme, allerdings mit neun in unregelmäßigen Abständen angeordneten Nahtpunkten; und Fig. 6b eine schematische Darstellung der Anordnung der Nahtpunkte gemäß Fig. 6a;

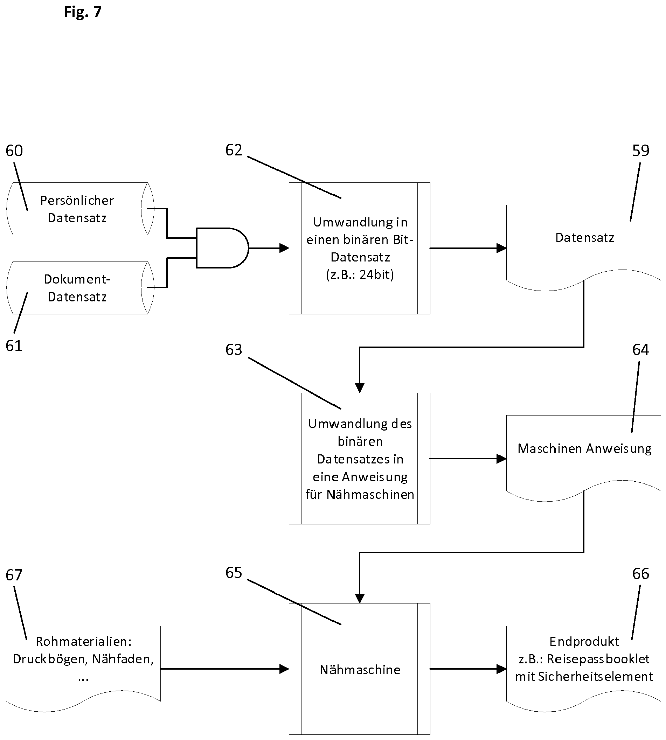

Fig. 7 schematisch ein Verfahren zur Herstellung eines erfindungsgemäßen Dokuments;

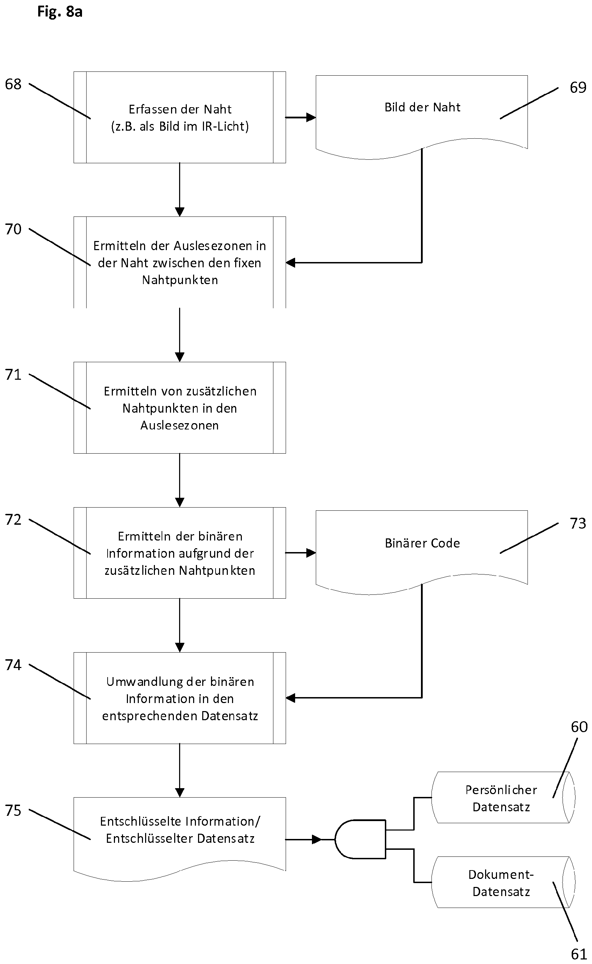

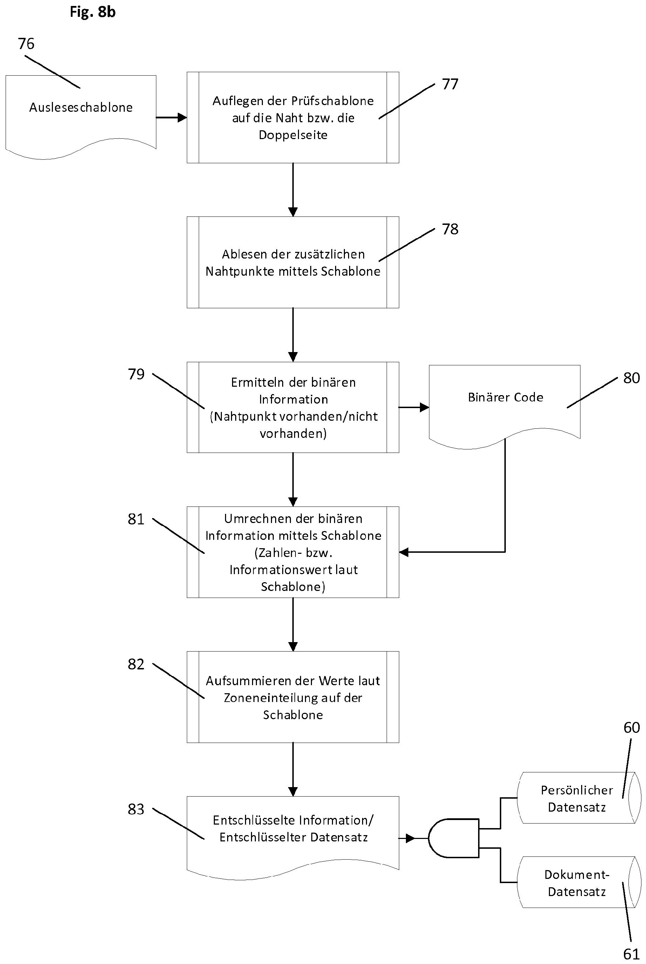

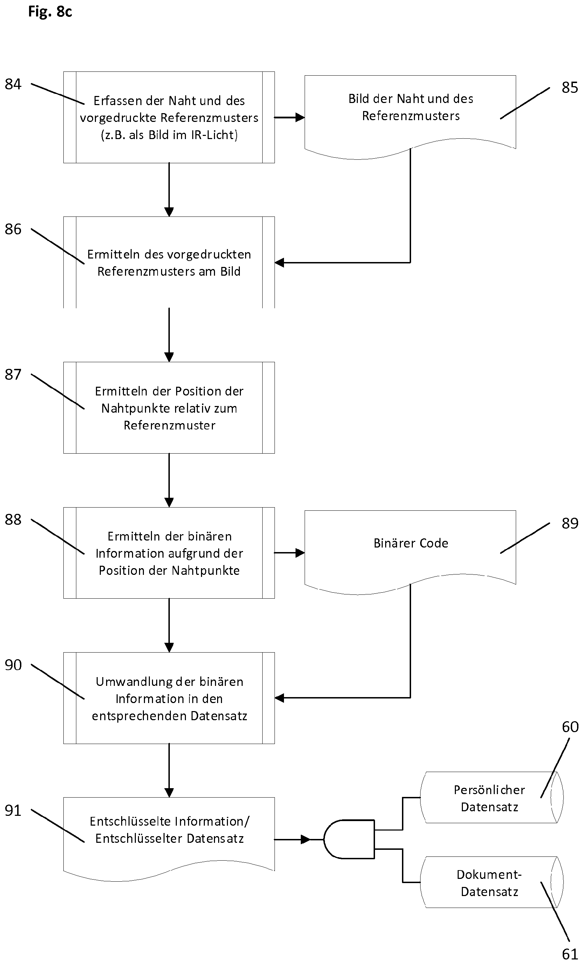

Fig. 8a schematisch ein Verfahren zum elektronischen Auslesen eines Sicherheitscodes eines erfindungsgemäßen Dokuments; Fig. 8b ein Verfahren zum manuellen Auslesen eines Sicherheitscodes eines erfindungsgemäßen Dokuments mit einer Schablone; und Fig. 8c ein Verfahren zum Auslesen eines Sicherheitscodes eines erfindungsgemäßen Dokuments mit einem Referenzmuster.

In Fig. 1a ist ein Dokument 1 in Form eines geöffneten Hefts mit Blick auf eine Doppelseite 2 gezeigt. Das Heft umfasst mehrere Blätter 3, die durch eine herkömmliche Bindungsnaht 4 (oder Dokumentennaht) zusammengehalten werden. Im Bereich der Bindungsnaht 4 ist in Fig. 1a eine Infrarotaufnahme 5 der Doppelseite 2 gezeigt. Die Bindungsnaht 4 erstreckt sich im Wesentlichen über die gesamte Breite 6 des Dokuments 1 von 125 mm. Sie weist 25 Löcher 7 auf, durch die ein durchgehender Nähfaden 8 im Kettenstich (engl. "Chain Stitch") hindurchgeführt ist, sodass jedes Loch 7 einem Nahtpunkt 9 entspricht. Die Bindungsnaht 4 hält somit in bekannter Weise die Blätter 3 und Seiten des Dokuments 1 zusammen.

Fig. 1b zeigt eine schaubildliche Ansicht des Dokuments 1 gemäß Fig. 1a schräg von der Seite, wobei die Bindungsnaht 4 im Bereich des Falz 10 der Blätter 3 schematisch (nicht als Infrarotaufnahme) dargestellt ist. Dabei sind die Nahtpunkte 9 als dunkle Punkte an den Nahtpositionen eingezeichnet, welche durch den als dünnere Linie dargestellten Nähfaden 8 verbunden sind.

Die in Fig. 1c gezeigte Einteilung der Bindungsnaht 4 in 24 Auslesezonen 11 verwendet die Positionen der Nahtpunkte 9 als Grenzen 12, zwischen denen jeweils eine Auslesezone 11 angeordnet ist. Die Breite der einzelnen Auslesezonen 11 ist etwa 5 mm.

Fig. 2a zeigt eine Infrarotaufnahme 13 eines kurzen Abschnitts einer Bindungsnaht 14 der in Fig. 1a gezeigten Art, mit den darüber eingezeichneten Grenzen 15 der Auslesezonen 16, wobei die Grenzen 15 durch die Anordnung regelmäßiger Nahtpunkte 17 der Bindungsnaht 14 festgelegt sind. Innerhalb dreier der Auslesezonen 16 weist die dargestellte Bindungsnaht 14 zusätzliche Nahtpunkte 18 (oder "Informationspunkte") auf. Alle Nahtpunkte 17, 18 sind durch Löcher in der abgebildeten Seite 19 des Dokuments gebildet, durch die ein Nähfaden 20 hindurchgeführt ist. Sie sind in der gezeigten Infrarotaufnahme 13 als dunkle Einstichpunkte erkennbar.

Fig. 2b zeigt schematisch den in Fig. 2a als Infrarotaufnahme 13 dargestellten Abschnitt 21 der Bindungsnaht 14. Die regelmäßigen Nahtpunkte 17 sind als schwarz gefärbte Kreise und die zusätzlichen Nahtpunkte 18 als Ringe dargestellt. Durch sämtliche Nahtpunkte 17, 18 ist ein als gepunktete Linie dargestellter Nähfaden 20 hindurchgeführt.

Fig. 2c zeigt eine Darstellung des Schemas 22, nach dem der in Fig. 2a und 2b gezeigte Abschnitt der Bindungsnaht 14 einen Sicherheitscode repräsentiert. Wie anhand dieses Schemas 22 ersichtlich, werden die Auslesezonen 16 zwischen den in regelmäßigen Abständen angeordneten Nahtpunkten 17 (oder kurz "regelmäßigen Nahtpunkten") definierten Grenzen 15 als Stellen einer binären Zahl interpretiert. Die Ziffern an den einzelnen Stellen werden durch das Vorhandensein eines zusätzlichen (oder "unregelmäßigen") Nahtpunktes 18 innerhalb der entsprechenden Auslesezone 16 festgelegt. Wenn ein unregelmäßiger Nahtpunkt 18 innerhalb einer Auslesezone 16 vorhanden ist, hat dieser Nahtpunkt 18 zu den beiden benachbarten regelmäßigen Nahtpunkten 17 einen ersten Abstand 23. Wenn kein unregelmäßiger Nahtpunkt innerhalb einer Auslesezone 16 vorhanden ist, sind die beiden regelmäßigen Nahtpunkte 17, welche die Auslesezone 16 begrenzen, benachbart und haben einen zweiten Abstand 24. Der zweite Abstand 24 ist größer als der erste Abstand 23. Alle zweiten Abstände 24 fallen in einen zweiten Abstandbereich, dessen Breite von der Genauigkeit der Herstellung der regelmäßigen Nahtpunkte 17 abhängt. Alle ersten Abstände 23 fallen in einen ersten Abstandbereich, dessen Breite von der Genauigkeit der Herstellung der regelmäßigen und unregelmäßigen Nahtpunkte 17, 18 abhängt. Ein vorhandener unregelmäßiger Nahtpunkt 18 entspricht zwei Abständen 23 aus dem ersten Abstandbereich und repräsentiert die Ziffer "1" an der betreffenden Stelle. Die übrigen Stellen ohne unregelmäßigen Nahtpunkt entsprechen einem Abstand 24 aus dem zweiten Abstandbereich und repräsentieren jeweils die Ziffer "0". Der in Fig. 2c als Binärzahl dargestellte Sicherheitscode lautet demzufolge "1-0-1-1-0", was der Dezimalzahl 16 + 4 + 2 = 22 entspricht.

Der Nähfaden 20 in der in Fig. 2a gezeigten Infrarotaufnahme ist infrarotes Licht reflektierend ausgebildet. Dadurch weisen die Löcher der Nahtpunkte 17, 18 in der Infrarotaufnahme einen deutlichen Kontrast auf und sind somit besser erkennbar als bei einem Nähfaden, welcher infrarotes Licht überwiegend absorbieren würde.

Fig. 3a zeigt die Einteilung einer Auslesezone 16 gemäß Fig. 2c in eine innerhalb der Auslesezone 16 zentrierte Suchzone 25 und zwei jeweils seitlich davon angeordnete Toleranzzonen 26 für eine Situation ohne einen (zusätzlichen) Nahtpunkt innerhalb der Suchzone 25. Dies entspricht einer Repräsentation der Ziffer "0". Die Breite der Toleranzzonen 26 ist vorgegeben, zum Beispiel 1 mm.

In der in Fig. 3b dargestellten Situation ist ein zusätzlicher Nahtpunkt 18 innerhalb der Suchzone 25 angeordnet. Dies entspricht einer Repräsentation der Ziffer "1".

In der in Fig. 3c dargestellten Situation weicht der Nahtpunkt 27 von einer regelmäßigen Anordnung ab und ist innerhalb der Suchzone 25 angeordnet. Sofern die Vollständigkeit der regelmäßigen Nahtpunkte 17 nicht überprüft wird, wird diese Situation fehlerhaft als Repräsentation der Ziffer "1" erkannt.

In der in Fig. 3d dargestellten Situation ist ein zusätzlicher Nahtpunkt 28 außerhalb der Suchzone 25 und in der Toleranzzone 26 angeordnet. Diese Situation wird fehlerhaft als Repräsentation der Ziffer "0" erkannt. Derartige Fehler können beispielsweise durch Einhaltung eines Mindestabstands zwischen zwei Nahtpunkten bei der Herstellung der Bindungsnaht 14 vermieden werden.

In Fig. 4a und 4b ist ein erfindungsgemäßes Dokument 29 dargestellt, dessen Sicherheitscode eine Datumsangabe aufweist. Fig. 4a zeigt ähnlich Fig. 1a schematisch den Blick auf eine Seite 30 (genauer: eine Doppelseite) des Dokuments 29, wobei das Dokument 29 ein geöffnetes Heft mit mehreren Blättern 31 ist. Die Blätter 31 des Dokuments 29 werden im Bereich einer Falz 32 durch eine Bindungsnaht 33 zusammengehalten. Der Bereich der Bindungsnaht 33 ist in Fig. 4a als Infrarotaufnahme dargestellt. Die Bindungsnaht 33 weist 25 regelmäßige Nahtpunkte 34 und 15 dazwischen angeordnete Nahtpunkte 35 auf. An jedem Nahtpunkt 34, 35 ist ein Nähfaden 20 durch ein Loch in der Seite 30 hindurchgeführt. Die 24 Zwischenräume oder Auslesezonen 36 zwischen den 25 regelmäßigen Nahtpunkten 34 sind als Quadrate 37 oder Ringe 38 eingezeichnet. Die Ringe 38 markieren Auslesezonen 36 mit einem unregelmäßigen Nahtpunkt 35; die Quadrate 37 Auslesezonen 36 ohne einen solchen Nahtpunkt. Die Auslesezonen 36 repräsentieren die Stellen einer binären Zahlenkombination, d.h. einem binären Sicherheitscode 42. Dabei repräsentieren die Stellen 3-7 den Tag 39, die Stellen 8-11 das Monat 40 und die Stellen 12-22 das Jahr 41 einer Datumsangabe 42'. Die Stellen 1 und 2 sowie 23 und 24 bleiben ungenutzt. Im hier dargestellten Beispiel repräsentiert die Anordnung der Nahtpunkte 34, 35 das Datum 11. November 2011. Die Datumsangabe 42' kann z.B. einem in dem Dokument 29 abgedruckten Geburtsdatum eines Inhabers des Dokuments 29 entsprechen, sodass der Sicherheitscode zur Authentisierung dieser Information verwendet werden kann.

In Fig. 5a ist eine Infrarotaufnahme eines Ausschnitts eines erfindungsgemäßen Dokuments 43 im Bereich einer Bindungsnaht 44 dargestellt, wobei die dargestellte Seite 45 mit einem Referenzmuster 46 bedruckt ist. Das Referenzmuster 46 weist sechs quadratische Felder 47 mit jeweils einem Rahmen 48 und einer flächigen Füllung 49 auf. Die Rahmen 48 und/oder die Füllungen 49 der Felder 47 sind mit einer Infrarot-aktiven Farbe gedruckt, sodass die Anordnung der Felder 47 in einer Infrarotaufnahme der bedruckten Seite 45 deutlich erkennbar ist. Die Felder 47 sind in regelmäßigen Abständen entlang des Verlaufs der Bindungsnaht 44 des Dokuments 43 angeordnet. Bei der Herstellung des Dokuments 43 wird das Referenzmuster 46 vor der Herstellung der Löcher 50 auf eine noch lose Seite gedruckt. Erst danach wird, ausgerichtet auf das Referenzmuster 46, die Bindungsnaht 44 durch Herstellung der Löcher 50 und Hindurchführen eines oder mehrere Nähfäden 51 hergestellt. Die Anordnung der Nahtpunkte 52 der Bindungsnaht 44 in Bezug auf das Referenzmuster 46 repräsentiert einen Sicherheitscode: ein Feld 47, das einen Nahtpunkt 52 enthält, repräsentiert die Ziffer "1"; ein Feld 47 ohne Nahtpunkt 52 repräsentiert die Ziffer "0".

Fig. 5b zeigt schematisch den in Fig. 5a als Infrarotaufnahme dargestellten Ausschnitt des Dokuments mit der Bindungsnaht 44. Die Felder 47 des Referenzmusters 46 sind als gefüllte Rechtecke dargestellt und die Nahtpunkte 52 sind als schwarz gefärbte Kreise dargestellt. Durch sämtliche Nahtpunkte 52 ist ein als gestrichelte Linie dargestellter Nähfaden 51 hindurchgeführt. In dem in Fig. 5a und 5b gezeigten Beispiel repräsentiert die Anordnung der Nahtpunkte 52 relativ zu dem Referenzmuster 46 die Ziffernfolge "1-1-0-1-1-0" in dem abgebildeten Abschnitt. Grundsätzlich enthält die Anordnung der Nahtpunkte 52 die gesamte Information des Sicherheitscodes. Das Referenzmuster 46 dient vor allem einem einfachen manuellen oder automatischen Auslesen des Sicherheitscodes.

Fig. 6a zeigt eine Infrarotaufnahme eines weiteren erfindungsgemäßen Dokuments 53. Dabei sind die Nahtpunkte 54 einer Bindungsnaht 55 in zwei unterschiedlichen Abständen 56, 57 angeordnet. Dabei fällt der Abstand 56, 57 zwischen benachbarten Nahtpunkten 54 entweder in einen ersten Abstandbereich oder in einen zweiten Abstandbereich. Die beiden Abstandbereiche sind voneinander abgegrenzt und überlappen einander nicht. Dadurch wird eine Zuordnung jedes innerhalb einer Fertigungstoleranz hergestellten Abstands 56, 57 zu einem der beiden Abstandbereiche ermöglicht. Beginnend von der linken Seite in Fig. 6a fallen die Abstände 56 zwischen dem ersten und zweiten sowie zwischen dem zweiten und dritten Nahtpunkt 54 in den ersten Abstandbereich. Der im Vergleich dazu größere Abstand 57 zwischen dem dritten und vierten Nahtpunkt 54 fällt in den zweiten Abstandbereich. Die vier folgenden Abstände 56 fallen wieder in den ersten Abstandbereich und der letzte Abstand 57 in den zweiten Abstandbereich.

Fig. 6b zeigt schematisch den in Fig. 6a als Infrarotaufnahme dargestellten Ausschnitt des Dokuments 53 mit der Bindungsnaht 55. Die Nahtpunkte 54 sind als schwarz gefärbte Kreise dargestellt, wobei die Abstände 56, 57 zwischen diesen Kreisen den Sicherheitscode repräsentieren. Durch sämtliche Nahtpunkte 54 ist ein als gestrichelte Linie dargestellter Nähfaden 58 hindurchgeführt. Die kleineren Abstände 56, welche in den ersten Abstandbereich fallen, repräsentieren jeweils die Ziffer "1", die größeren Abstände 57, welche in den zweiten Abstandbereich fallen, repräsentieren jeweils die Ziffer "0". Der in dem gezeigten Beispiel von dem Dokument 53 repräsentierte Sicherheitscode weist somit die Ziffernfolge "1-1-0-1-1-1-1-0" auf.

In Fig. 7 ist ein erfindungsgemäßes Verfahren schematisch in der Art eines Flussdiagramms dargestellt. Das Beispiel geht davon aus, dass ein Sicherheitscode 59 aus einer Kombination eines Personen-Datensatzes 60 und eines Dokument-Datensatzes 61 abgeleitet wird. Der Personen-Datensatz 60 umfasst z.B. das Geburtsdatum eines Reisepassinhabers. Der Dokument-Datensatz 61 umfasst z.B. eine einzigartige Seriennummer des Sicherheitsdokumentes (beispielsweise die Passnummer eines Reisepasses). Die beiden Datensätze 60, 61 können z.B. aus einer Datenbank abgefragt oder aus einem mit dem herzustellenden Dokument verbundenen Informations-Code (z.B. Datamatrixcode oder QR-Code) ausgelesen werden. In einem Ableitungsschritt 62 wird ein binärer Sicherheitscode (z.B. 24 Bit groß) 59 aus dem Personen-Datensatz 60 und dem Dokument-Datensatz 61 ermittelt. Die Kombination der Datensätze 60, 61 kann beispielsweise durch Aneinanderfügen der Informationen (wenn beide nicht zu lang sind und mit einer zur Verfügung stehenden Bit-Anzahl auskommen) oder durch Bildung eines Codes (z.B. einer Quersumme oder einer Prüfziffer nach einem bekannten Verfahren) erfolgen. Anschließend wird in einem Umwandlungsschritt 63 der Sicherheitscode 59 in Maschinenanweisungen 64 für eine Nähmaschine 65 umgewandelt. Diese Maschinenanweisungen 64 sind spezifisch für die Nähmaschine 65, welche zur Herstellung eines Dokuments 66 verwendet wird. Die Nähmaschine 65 kann z.B. von der Firma Singer oder Pfaff sein. Die Maschinenanweisungen 64 geben die Anordnung von Nahtpunkten zur Repräsentation des ermittelten Sicherheitscodes 59 vor. Sie können beispielsweise den Werkstückvorschub der mindestens eine Seite 67 steuern, sodass der Werkstückvorschub entsprechend der ermittelten Anordnung von Nahtpunkten geändert wird und die Abstände zwischen den Nahtpunkten in Abhängigkeit von dem Sicherheitscode 59 hergestellt werden. Alternativ können die Maschinenanweisungen 64 den Werkzeugvorschub und somit den Nahtabstand ändern. Der Nähmaschine 65 wird die mindestens eine Seite 67 eines herzustellenden Dokuments 66 sowie ein Nähfaden und die Maschinenanweisungen 64 zugeführt. Die Nähmaschine 65 stellt den Maschinenanweisungen 64 folgend zumindest zwei Löcher in der mindestens einen Seite 67 her. Die Löcher werden durch Einstechen beim Einbringen eines Nähfadens in die so hergestellten Löcher hergestellt. Die mindestens eine Seite 67 mit der fertigen Naht ist ein erfindungsgemäßes Dokument 66. Die Anordnung der Nahtpunkte der auf diese Weise hergestellten Naht repräsentiert dabei den Sicherheitscode 59.

Das Auslesen der Nahtpunkte erfolgt vorzugsweise optisch, entweder unter sichtbarem Licht (bei bestimmten Nähfaden möglich) oder unter infrarotem Licht (z.B. 900 bis 1000 nm Wellenlänge). Nähfäden und Untergrunddruck, mit Ausnahme eines Referenzmusters, sollten nicht IR-aktiv (d.h. infrarotes Licht absorbierend) sein.

In einer bevorzugten Anwendung erfolgt das Auslesen optisch mittels einer Kamera eines mobilen Endgeräts (z.B. eines Smartphones). Das Endgerät kann dabei eine Software (Computerprogrammprodukt) aufweisen, welche zur Durchführung eines erfindungsgemäßen Auslese-Verfahrens eingerichtet ist und die Komponenten des Endgeräts (Prozessor, Speicher, Kamera, Bildschirm, etc.) zur Durchführung der Schritte eines solchen Verfahrens konfiguriert. Dadurch kann ein Auslesen, Umwandeln, Anzeigen und/oder Überprüfen des Sicherheitscodes eines mit der Kamera aufgenommenen Dokuments z.B. mit einem Smartphone durchgeführt oder zumindest unterstützt werden.

Drei Varianten eines solchen Auslese-Verfahrens sind in den Figuren 8a, 8b und 8c schematisch als Ablaufdiagramm dargestellt. Fig. 8a zeigt dabei ein Verfahren zum elektronischen Auslesen eines Sicherheitscodes eines erfindungsgemäßen Dokuments 29 gemäß Fig. 4a und 4b. Dabei wird zunächst in einem Erfassungsschritt 68 mit einer geeigneten Kamera und bei geeigneter Beleuchtung ein Bild (z.B. ein Infrarotbild) 69 der Nahtpunkte 34, 35 auf der Doppelseite 30 des Dokuments 29 erfasst. Anschließend werden in einem ersten Erkennungsschritt 70 durch Verarbeitung des Bilds 69 die Nahtpunkte 34, 35 erkannt. Im selben Erkennungsschritt 70 wird die Anordnung der erkannten Nahtpunkte 34, 35 ermittelt, sodass jene Nahtpunkte 34, welche regelmäßig angeordnet sind, ermittelt werden können. Anhand dieser regelmäßigen Nahtpunkte 34 werden die Lage und Abmessungen der Auslesezonen 36 zwischen den regelmäßigen Nahtpunkten 34 erkannt. Auf Grundlage der erkannten Auslesezonen 36 werden in einem zweiten Erkennungsschritt 71 jene Auslesezonen 36 ermittelt, in denen ein zusätzlicher oder unregelmäßiger Nahtpunkt 35 angeordnet ist. Aus der Abfolge der Auslesezonen 36 und der Information, welche davon mit einem zusätzlichen/unregelmäßigen Nahtpunkt 35 belegt sind, wird in einem ersten Verarbeitungsschritt 72 ein binärer Sicherheitscode 73 ermittelt. In einem zweiten Verarbeitungsschritt 74 wird der binäre Sicherheitscode 73 interpretiert und gegebenenfalls entschlüsselt, um einen darin kodierten Datensatz 75 zu erhalten, der sich aus einem Personen-Datensatz 60 und einem Dokument-Datensatz 61 zusammensetzt.

In Fig. 8b ist ein Verfahren zum manuellen Auslesen eines Sicherheitscodes eines erfindungsgemäßen Dokuments mit einer Ausleseschablone 76 gezeigt. Dabei wird in einem Vorbereitungsschritt 77 die Ausleseschablone 76 auf eine Bindungsnaht 33 der Doppelseite 30 aufgelegt (vgl. Fig. 4a, allerdings ohne Schablone). Beim Auflegen der Ausleseschablone 76 ist darauf zu achten, dass die regelmäßigen Nahtpunkte 34 durch die Schablone 76 verdeckt sind. Mit der Schablone 76 sind somit im Wesentlichen die Bereiche innerhalb der Quadrate 37 und Ringe 38 sichtbar. Im darauffolgenden Ableseschritt 78 wird ermittelt, in welchen der sichtbaren Bereiche ein zusätzlicher (hier: unregelmäßiger) Nahtpunkt 35 angeordnet ist. Aus dieser Information wird im ersten Verarbeitungsschritt 79 der binäre Sicherheitscode 80 ermittelt. Diese kann anschließend in einem zweiten Verarbeitungsschritt 81, z.B. unter Zuhilfenahme einer Ausleseschablone 76 mit darauf gedruckten Umrechnungsregeln, in einen Zahlen- oder Informationswert umgerechnet werden. Schließlich können in einem dritten Verarbeitungsschritt 82 die umgerechneten Zahlenwerte summiert werden, um einen dekodierten Datensatz 83 zu erhalten, der z.B. eine Prüfsumme eines Personen-Datensatzes 60 und eines Dokument-Datensatzes 61 ist.

Fig. 8c zeigt ein Verfahren zum elektronischen Auslesen eines Sicherheitscodes eines erfindungsgemäßen Dokuments 43 mit einem Referenzmuster 46 (vgl. Fig. 5a und 5b). Dabei wird zunächst in einem Erfassungsschritt 84 mit einer geeigneten Kamera und bei geeigneter Beleuchtung ein Bild (z.B. ein Infrarotbild) 85 der Nahtpunkte 52 und des Referenzmusters 46 des Dokuments 43 erfasst. Anschließend wird in einem ersten Erkennungsschritt 86 durch Verarbeitung des Bilds 85 die Position und Lage des Referenzmusters 46 erkannt. In einem zweiten Erkennungsschritt 87 werden die Nahtpunkte 52 erkannt und deren Anordnung relativ zum erkannten Referenzmuster ermittelt. Aus der Anordnung der Nahtpunkte 52 relativ zum Referenzmuster wird in einem ersten Verarbeitungsschritt 88 ein binärer Sicherheitscode 89 ermittelt. In einem zweiten Verarbeitungsschritt 90 wird der binäre Sicherheitscode 89 interpretiert und gegebenenfalls entschlüsselt, um einen darin kodierten Datensatz 91 zu erhalten, der einer Kombination aus einem Personen-Datensatz 60 und einem Dokument-Datensatz 61 entspricht.

## Patentansprüche

1. Dokument (29) mit mindestens einer Seite (30) und mit zumindest einem Nähfaden (20), welcher an zumindest zwei Nahtpunkten (34, 35) durch ein Loch in der mindestens einen Seite (30) hindurchgeführt ist, **dadurch gekennzeichnet, dass** die Anordnung der Nahtpunkte (34, 35) einen Sicherheitscode (42) repräsentiert.

2. Dokument (53) gemäß Anspruch 1, **dadurch gekennzeichnet, dass** der Abstand oder die Abstände (56, 57) zwischen benachbarten Nahtpunkten (54) einen Sicherheitscode repräsentiert bzw. repräsentieren.

3. Dokument (53) gemäß Anspruch 2, **dadurch gekennzeichnet, dass** jeder der Abstände (56, 57), welche den Sicherheitscode repräsentieren, entweder in einen ersten Abstandbereich oder in einen zweiten Abstandbereich fällt, wobei sich der erste Abstandbereich und der zweite Abstandbereich nicht überlappen.

4. Dokument gemäß Anspruch 1, **dadurch gekennzeichnet, dass** eine Anordnung der Nahtpunkte quer zu einer allgemeinen Nahtrichtung, insbesondere die Abstände der einzelnen Nahtpunkte von einer Mittellinie sämtlicher Nahtpunkte, den Sicherheitscode repräsentiert.

5. Dokument (29) gemäß einem der Ansprüche 1 bis 4 mit zumindest drei Nahtpunkten (34, 35), **dadurch gekennzeichnet, dass** ein Teil der Nahtpunkte (34) in regelmäßigen Abständen angeordnet ist und die Anzahl und Anordnung der verbleibenden Nahtpunkte (35) den Sicherheitscode (42) repräsentiert.

6. Dokument (29) gemäß einem der Ansprüche 1 bis 5, **dadurch gekennzeichnet, dass** der zumindest eine Nähfaden (20) infrarotes Licht reflektierend ausgebildet ist.

7. Dokument (43) gemäß einem der Ansprüche 1 bis 6, **dadurch gekennzeichnet, dass** die mindestens eine Seite (45) mit einem Referenzmuster (46) bedruckt ist, wobei die Anordnung der Nahtpunkte (52) relativ zu dem Referenzmuster (46) den Sicherheitscode repräsentiert.

8. Dokument (43) gemäß Anspruch 7, **dadurch gekennzeichnet, dass** das Referenzmuster (46) mit einer infrarot aktiven Farbe gedruckt ist.

9. Dokument (29) gemäß einem der Ansprüche 1 bis 8, **dadurch gekennzeichnet, dass** der Sicherheitscode (42) zur Authentisierung einer in dem Dokument (29) enthaltenen Information eingerichtet ist.

10. Verfahren zur Herstellung eines Dokuments (66) nach einem der Ansprüche 1 bis 9, das Verfahren umfassend die Schritte:
- Ermitteln eines Sicherheitscodes (59);
- Ermitteln einer Anordnung von Nahtpunkten zur Repräsentation des ermittelten Sicherheitscodes (59);
- Herstellen von zumindest zwei Löchern in mindestens einer Seite (67) des Dokuments (66) entsprechend der ermittelten Anordnung von Nahtpunkten; und
- Einbringen zumindest eines Nähfadens in die zumindest zwei hergestellten Löcher.

11. Verfahren gemäß Anspruch 10, **dadurch gekennzeichnet, dass** die zumindest zwei Löcher als Einstichlöcher beim Einbringen des zumindest einen Nähfadens hergestellt werden.

12. Verfahren gemäß Anspruch 10 oder 11, **dadurch gekennzeichnet, dass** die Anordnung der zumindest zwei Löcher bei deren Herstellung durch eine Änderung eines Werkzeugvorschubs und/oder durch Änderung eines Werkstückvorschubs entsprechend der ermittelten Anordnung von Nahtpunkten erzielt wird.

13. Verfahren gemäß einem der Ansprüche 10 bis 12, **dadurch gekennzeichnet, dass** vor dem Herstellen der zumindest zwei Löcher ein Referenzmuster (46) auf mindestens eine Seite (67) des Dokuments (66) gedruckt wird.

14. Verfahren zum Auslesen eines Sicherheitscodes (73) eines Dokuments (29) nach einem der Ansprüche 1 bis 9, das Verfahren umfassend die Schritte:
- Erfassen eines Bilds, vorzugsweise eines Infrarotbilds (69), der Nahtpunkte (34, 35) der mindestens einen Seite (30) des Dokuments (29) ;
- Erkennen der Nahtpunkte (34, 35) in dem erfassten Bild;
- Ermitteln der Anordnung der erkannten Nahtpunkte; und
- Ermitteln des Sicherheitscodes (73) des Dokuments (29) aus der ermittelten Anordnung.

15. Computerprogrammprodukt, das direkt in den internen Speicher eines digitalen Computers geladen werden kann und Softwarecodeabschnitte umfasst, mit denen die Schritte gemäß Anspruch 14 ausgeführt werden, wenn das
Computerprogramm auf einem Computer läuft.
